# EUROPEAN PATENT SPECIFICATION

(11) **EP 0 269 183 B1**
(45) Date of publication and mention of the grant of the patent: **13.07.1994**
(21) Application number: 87202280.1
(22) Date of filing: 20.11.1987
(51) Int. Cl.: A01B 33/08, A01B 33/06

(54) **A soil cultivating machine**
Bodenbearbeitungsmaschine
Machine pour le travail du sol

(30) Priority: 24.11.1986 NL 8602972
(43) Date of publication of application: 01.06.1988
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- FR-E- 86 726
- GB-A- 619 713
- GB-A- 853 796
- GB-A- 1 220 199
- GB-A- 1 547 718
- US-A- 3 971 445

## Description

The invention relates to a soil cultivating machine comprising a frame (1) and soil working members (3) which are arranged in side-by-side relationship in a row transversely to the direction of operative travel (A) of the machine and are power-driven about upwardly directed axes provided with a drive of intermeshing gear wheels, said machine having a supporting roller, said drive including a gear box (15) provided with a first drive shaft (23) which extends in the direction of operative travel (A) and can be coupled with the power take-off shaft of a tractor, which shaft is in driving connection with the working members via a speed variator (20) comprising two intermeshing exchangeable gear wheels (21, 22) and a bevel gear transmission, driving a vertical axle which is coupled with one of said intermeshing gear wheels of said drive and wherein said first drive shaft (23) serves to drive via the speed variator the soil working members (3) with a number of speeds in a direction such that the active portions (7) of the soil working elements (3) are trailing.

Machines of this type are well known, e.g. from US-A-3971445, and are employed in the preparation of a seed bed, for which purpose soil working elements of the soil working members are provided with an active portion which, relative to the direction of rotation of the soil working member, assumes an appropriate position for the preparation of the seed bed.

It is advisable that the working members can be driven with different speeds which will allow the farmer to make seed beds.

It is known that with some types of these machines one can change the position of the tines of the working members by loosening and dismounting them and mount them in a changed position.

It is a basic idea of the invention that, although a number of speeds of the rotors for making a seed bed under different circumstances is required, only one rotor speed will be sufficient for stubble action of the machine.

To incorporate this basic idea in the known machine, this machine is characterized in that a second drive shaft (19), which extends parallel to and can be coupled as an alternative to the first drive shaft (32) with the power take-off shaft of the tractor, is connected to a gear wheel of said bevel gear transmission (17, 18) with the soil working members such that the direction of rotation of the soil working members (3) is reversed with respect to the first mentioned direction of rotation and the tines are pointing in a forward direction, the speed ratio of the said reverse gear being chosen such that the machine is suitable for stubble cleaning when said soil-working members are driven in said reverse direction.

It is remarked that in GB-A 1220199 a gear box for a horizontal axle fraise is described which is provided with two drive axles positioned, in top view, side-by-side. With the aid of this gear box the outgoing horizontal drive axle can be driven in two directions.

For a better understanding of the invention and to show how the same may be carried into effect, reference will now be made, by way of example, to the accompanying drawings, in which:
Figure 1 is a plan view of a soil cultivating machine in accordance with the invention;
Figure 2 is, to en enlarged scale, a view taken in the direction of the arrow II in Figure 1, and

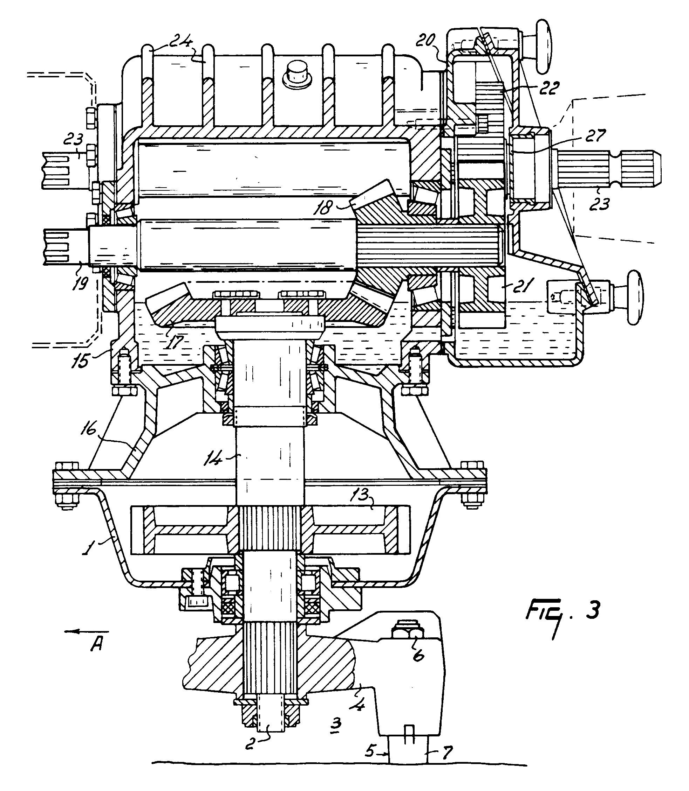

Figure 3 is, to an enlarged scale, a view taken on the line III - III in Figure 2.

The implement shown in the drawings relates to a soil cultivating machine, in particular one for the preparation of a seed bed.

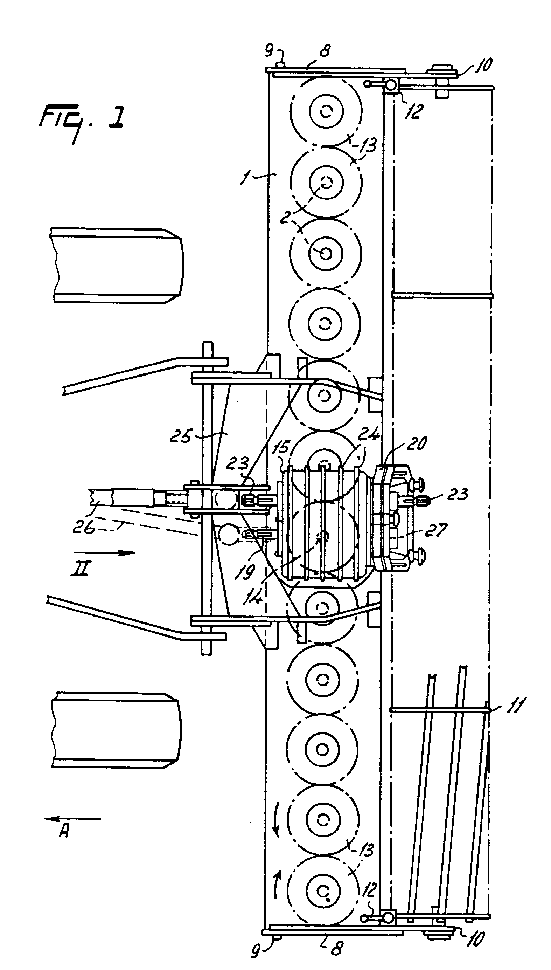

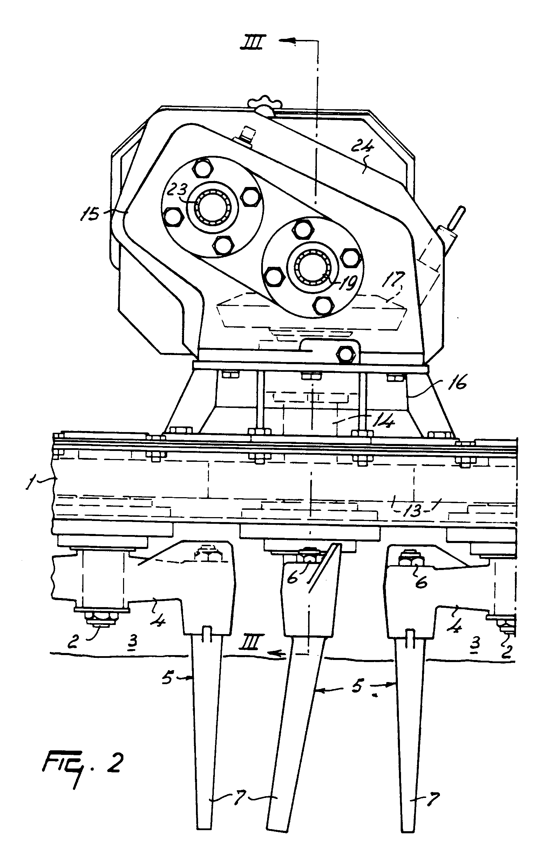

The machine comprises a box-like frame portion 1 extending transversely to the direction of operative travel A and being located at least substantially horizontally. Inside the frame portion 1 there are bearing-supported at equal interspaces of preferably 25 cms the upwardly directed, preferably at least substantially vertical, shafts 2 of soil working members 3. Each of the soil working members 3 includes an at least substantially horizontally extending carrier 4 which is fitted on the end of the shaft 2 projecting from the bottom of the frame portion 1. At its ends, each carrier 4 is provided with downwardly extending soil working elements 5 afforded by tines. The soil working elements 5 are fitted by means of a fastening member 6 and include each an active portion 7, the longitudinal centre line of which encloses an angle of approximately 8° with the longitudinal centre line of said fastening member, the arrangement being such that the active portions of two facing tines extend at least substantially parallel to each other and, taken in a plan view, are arranged at least substantially tangentially. The ends of the box-like frame portion 1 are closed by upwardly directed plates 8, which are located at least substantially parallel to a vertical plane in the direction of operative travel A of the machine. Near its front side, each of the plates 8 is provided with a pin 9 which extends transversely to the direction of operative travel A and about which an arm 10 extending rearwardly along the inner side of the plate 8 is freely pivotal. The pins 9 are in alignment. Between the rear ends of the arms 10 and behind the row of soil working members 3 there is arranged freely rotatably a roller 11 which, in this embodiment, is designed as a cage roller. However, this roller may alternatively be in the form of a packer roller. Between the rear side of the box-like frame portion 1 and each of the arms 10 there is arranged an adjusting device 12, the arrangement being such that by means thereof the position of the roller 11 can be changed relative to the frame portion 1 and hence the working depth of the soil working members 3 is adjustable. In this embodiment, the adjusting device 12 is constituted by a threaded spindle. Inside the box-like frame portion 1, each of the shafts 2 of the soil working members 3 is provided with a spur gear 13, the arrangement being such that the gear wheels on the shafts of adjacent soil working members are in driving connection. Near the centre, the shaft 2 of a soil working member 3 is upwardly extended and reaches by means of the extension 14 to into a gear box 15. The gear box 15 is mounted by means of a support 16 on the upper side of the box-like frame portion 1. At the upper side of the extension 14 and inside the gear box 15 there is arranged a bevel gear wheel 17, which is in driving connection with a bevel gear wheel 18 fitted on a shaft 19 extending into the direction of operative travel A and being bearing-supported in the walls of the gear box 15. The shaft 19 reaches at its rear side to into the housing of a speed variator 20, inside which the shaft is in driving connection via exchangeable gear wheels 21 and 22 with a shaft 23 which is located thereabove and also extends in the direction of operative travel A. The shafts 19 and 23 are arranged such that they extend parallel to each other and, taken in a plan view, are located next to each other, the said shaft 23 being positioned at least substantially near the centre of the machine (Figure 1). Taken in the direction of operative travel A of the machine, a plane through the longitudinal centre lines of the shafts 19 and 23 encloses an angle of approximately 30° with the horizontal plane (Figure 2). At its upper side, the gear box 15 is provided with cooling ribs 24 which are arranged one after the other with respect to the direction A and at least substantially parallel to each other. Like the shaft 23, the shaft 19 projects from the front side of the gear box 15. In addition, the shaft 23 projects at the rear side from the housing of the speed variator 20, the arrangement being such that from this end of the shaft an other implement, e.g. a pneumatic seed drill, can be driven. The front side of the frame portion 1 is provided with a triangular trestle 25, the arrangement being such, that the gear box 15 is located between the legs of the said trestle. At its front side, the trestle 25 has a three-point connection for coupling of the machine to the three-point lifting hitch of a tractor.

The machine described in the foregoing operates as follows.

During operation, the machine is coupled by means of the trestle 25 to the three-point lifting hitch of the tractor and, when the machine moves in the direction indicated by the arrow A, the soil working members are driven from the power take-off shaft of the tractor via an intermediate shaft 26 connected to the upper shaft 23 and the above-described transmission in the directions as indicated by means of arrows in Figure 1. In this situation, adjacent soil working members 3 rotate in opposite directions and, since the active portions 7 of the soil working elements 5 are arranged trailing to their individual direction of rotation, in such a manner that they cultivate with their soil working elements 5 at least adjoining strips of soil in the preparation of a seed bed. As has been set out already in the foregoing, the working depth of the soil working members 3 can be set by means of the roller 11 located behind the said soil working members. For this purpose the arms 10 can be adjusted in height by means of the threaded spindles 12. Using the speed variator 20, it is possible to give the soil working members 3 a different rotational speed. At its rear side, the speed variator 20 is provided with a window 27 including a marking, by means of which it is possible to determine the gear ratio in use between the gear wheels inside the speed variator. If the machine is intended for an other soil working operation than the preparation of a seed bed, e.g. for a stubbling operation, the intermediate shaft 26 can be disconnected from the upper shaft 23 and can be connected to the end of the lower shaft 19 projecting from the front of the gear box and being provided with splines. The soil working members 3 are then driven in the opposite direction, so that the active portions 7 of the soil working elements 3 of the respective soil working members 5 are directed forwardly relative to the direction of rotation, whereby the soil is torn loose and the stubbles are brought to the surface in an efficient manner. For this drive only one speed will suffice. During operation, the free end portions of the shafts 19 and 23 projecting beyond the gear box 15 are covered by means of a screening hood (not shown).

## Claims

1. A soil cultivating machine comprising a frame (1) and soil working members (3) which are arranged in side-by-side relationship in a row transversely to the direction of operative travel (A) of the machine and are power-driven about upwardly directed axes provided with a drive of intermeshing gear wheels, said machine having a supporting roller, said drive including a gear box (15) provided with a first drive shaft (23) which extends in the direction of operative travel (A) and can be coupled with the power take-off shaft of a tractor, which shaft is in driving connection with the working members via a speed variator (20) comprising two intermeshing exchangeable gear wheels (21, 22) and a bevel gear transmission, driving a vertical axle which is coupled with one of said intermeshing gear wheels of said drive and wherein said first drive shaft (23) serves to drive via the speed variator the soil working members (3) with a number of speeds in a direction such that the active portions (7) of the soil working elements (3) are trailing, characterized in that a second drive shaft (19), which extends parallel to and can be coupled as an alternative to the first drive shaft (32) with the power take-off shaft of the tractor, is connected to a gear wheel of said bevel gear transmission (17, 18) with the soil working members such that the direction of rotation of the soil working members (3) is reversed with respect to the first mentioned direction of rotation and the tines are pointing in a forward direction, the speed ratio of the said reverse gear being chosen such that the machine is suitable for stubble cleaning when said soil-working members are driven in said reverse direction.

2. A soil cultivating machine as claimed in claim 1, characterized in that the said shafts (19, 23) are bearing supported in the gear box (15) at different levels.

3. A soil cultivating machine as claimed in claim 2 characterized in that, taken in a plan view, the shafts (19, 23) are located adjacently to each other.

4. A soil cultivating machine as claimed in any one of claims 2 or 3, characterized in that, taken in the direction of operative travel (A), a plane through the longitudinal centre lines of the first and second drive shafts (19, 23) encloses an acute angle with the horizontal plane.

5. A soil cultivating machine as claimed in any one of the preceding claims, characterized in that the first shaft (19) projects at the rear side from the gear box (15) and is provided with an end for the drive of further implements.

## Patentansprüche

1. Bodenbearbeitungsmaschine mit einem Gestell (1) und Bodenbearbeitungsgliedern (3), die nebeneinander in einer Reihe quer zur Arbeitsrichtung (A) der Maschine angeordnet und zwangläufig um aufwärts gerichtete Achsen angetrieben sind, welche Bodenbearbeitungsgliedern durch ineinandergreifende Zahnräder angetrieben sind; die Maschine hat eine Stützwalze, und der Antrieb weist ein Getriebegehäuse (15) mit einer ersten Antriebswelle (23) auf, die sich in Arbeitsrichtung (A) erstreckt und an die Zapfwelle eines Schleppers anzuschliessen ist, wobei die Welle mit den Bearbeitungsgliedern über ein Wechselgetriebe (20) antriebsverbunden ist, das zwei ineinandergreifende austauschbare Zahnräder (21, 22) und ein Kegelradgetriebe hat, das eine vertikale Welle antreibt, die mit einem der ineinandergreifenden Zahnräder des Antriebes verbunden ist, und wobei die erste Antriebswelle (23) dazu dient, die Bodenbearbeitungsglieder (3) über das Wechselgetriebe mit einer Anzahl von Umdrehungen in einer solchen Richtung anzutreiben, dass die Arbeitsteile (7) der Bodenbearbeitungsglieder (3) nachlaufend arbeiten, dadurch gekennzeichnet, dass eine zweite Antriebswelle (19), die parallel und alternativ zu der ersten Antriebswelle (23) an die Zapfwelle des Schleppers anzuschliessen ist, mit einem Zahnrad des Kegelradgetriebes (17,18) und mit den Bodenbearbeitungsgliedern derart verbunden ist, dass sich die Drehrichtung der Bodenbearbeitungsglieder (3) relativ zu der zuerst genannten Drehrichtung umkehrt und die Zinken nach vorn gerichtet sind, wobei die Geschwindigkeit des reversierten Getriebes derart gewählt ist, dass sich die Maschine bei gegensinnig angetriebenen Bodenbearbeitungsgliedern zur Stoppelbearbeitung eignet.

2. Bodenbearbeitungsmaschine nach Anspruch 1, dadurch gekennzeichnet, dass die Wellen (19, 23) in dem Getriebegehäuse (15) in verschiedenen Höhen gelagert und abgestützt sind.

3. Bodenbearbeitungsmaschine nach Anspruch 2, dadurch gekennzeichnet, dass die Wellen (19, 23) in Draufsicht nebeneinander angeordnet sind.

4. Bodenbearbeitungsmaschine nach Anspruch 2 oder 3, dadurch gekennzeichnet, dass in Arbeitsrichtung (A) betrachtet eine Ebene durch die Längsmittellinien der ersten und zweiten Antriebswelle (23, 19) einen spitzen Winkel mit der Horizontalebene bildet.

5. Bodenbearbeitungsmaschine nach einem der vorhergehenden Ansprüche, dadurch gekennzeichnet, dass die erste Welle (23) an der Rückseite aus dem Getriebegehäuse (15) heraussteht und ein Ende zum Antrieb von weiteren Geräten aufweist.

## Revendications

1. Machine pour cultiver le sol comprenant un châssis (1) et des organes de travail du sol (3) qui sont disposés côte à côte en une rangée transversalement au sens de marche (A) du travail de la machine et sont entraînés par un moteur autour d'axes dirigés vers le haut, munis d'un entraînement à engrenages en prise entre eux, ladite machine ayant un rouleau de support, ledit entraînement incluant une boîte d'engrenages (15) munie d'un premier arbre d'entraînement (23) qui s'étend dans le sens de marche (A) du travail et peut être couplé à l'arbre de prise de force d'un tracteur, lequel arbre est en liaison d'entraînement avec les organes de travail par l'intermédiaire d'un variateur de vitesse (20) comprenant deux engrenages (21, 22) interchangeables, en prise entre eux, et une transmission à pignons coniques entraînant un arbre vertical qui est couplé à un desdits engrenages en prise entre eux dudit entraînement, et dans laquelle ledit premier arbre d'entraînement (23) sert à entraîner par l'intermédiaire du variateur de vitesse les organes de travail du sol (3) à une certaine vitesse de rotation dans un sens tel que les parties actives (7) des organes de travail du sol (3) se trouvent à l'arrière,
**caractérisée** en ce qu'un deuxième arbre d'entraînement (19) qui s'étend parallèlement audit premier arbre d'entraînement (23) et peut être couplé, en tant qu' alternative à celui-ci, à l'arbre de prise de force du tracteur, est relié à un engrenage de ladite transmission à pignons coniques (17, 18) avec les organes de travail du sol de telle sorte que le sens de rotation des organes de travail du sol (3) est inversé par rapport au premier sens de rotation précité, et les dents sont pointées vers l'avant, le rapport de vitesses desdits engrenages inverses étant choisi tel que la machine convient pour le déchaumage quand lesdits organes de travail du sol sont entraînés dans ledit sens inverse.

2. Machine pour cultiver le sol selon la revendication 1, caractérisée en ce que lesdits arbres (19, 23) sont supportés par des paliers dans la boîte d'engrenages (15) à des niveaux différents.

3. Machine pour cultiver le sol selon la revendication 2, caractérisée en ce que, en étant vus en plan, les arbres (19, 23) sont situés en des positions adjacentes l'une à l'autre.

4. Machine pour cultiver le sol selon l'une quelconque des revendications 2 ou 3, caractérisée en ce que, en étant vu dans le sens de marche (A) du travail, un plan passant par les axes longitudinaux du premier et du deuxième arbres d'entraînement (19, 23) forme un angle aigu avec le plan horizontal.

5. Machine pour cultiver le sol selon l'une quelconque des revendications précédentes, caractérisée en ce que le premier arbre (23) dépasse sur le côté postérieur de la boîte d'engrenages (15) et est muni d'une extrémité pour l'entraînement d'autres machines.
